# EUROPEAN PATENT SPECIFICATION

(11) **EP 3 831 576 B1**
(45) Date of publication and mention of the grant of the patent: **20.12.2023**
(21) Application number: 19845046.2
(22) Date of filing: 08.07.2019
(51) Int. Cl.: B33Y 10/00, B33Y 70/00, B33Y 80/00, B33Y 40/20, C08K 5/00, B29C 64/118, B29C 64/153, B29C 64/165, B29K 23/00

(54) **THREE-DIMENSIONAL MODELING MATERIAL, THREE-DIMENSIONAL MODEL PRODUCTION METHOD USING SAME, AND THREE-DIMENSIONAL MODEL**
DREIDIMENSIONALES MODELLIERMATERIAL, DREIDIMENSIONALES MODELLHERSTELLUNGSVERFAHREN UNTER VERWENDUNG DESSELBEN UND DREIDIMENSIONALES MODELL
MATÉRIAU DE MODÉLISATION TRIDIMENSIONNELLE, PROCÉDÉ DE PRODUCTION D'UN MODÈLE TRIDIMENSIONNEL L'UTILISANT, ET MODÈLE TRIDIMENSIONNEL

(30) Priority: 30.07.2018 JP 2018142292
(43) Date of publication of application: 09.06.2021
(73) Proprietor: KONICA MINOLTA, INC., Tokyo 100-7015 (JP)
(72) Inventor: SHIRAISHI, Masaharu, Tokyo 100-7015 (JP); KOJIMA, Takeshi, Tokyo 100-7015 (JP); GOTO, Kenji, Tokyo 100-7015 (JP); KATAKURA, Rie, Tokyo 100-7015 (JP); KITA, Hiroshi, Tokyo 100-7015 (JP)
(74) Representative: MFG Patentanwälte Meyer-Wildhagen Meggle-Freund Gerhard PartG mbB
(86) International application number: PCT/JP2019/026920
(87) International publication number: WO 2020/026709

(56) References cited:
- EP-A1- 2 079 421
- WO-A1-2019/067794
- CN-A- 105 906 946
- GB-A- 1 371 192
- JP-A- S5 594 328
- JP-A- 2001 353 787
- JP-A- 2013 540 629
- JP-A- 2016 531 019
- JP-A- 2016 532 148
- KR-A- 20130 002 621
- KR-A- 20180 063 965
- KR-B1- 101 813 403
- US-A- 3 838 099

## Description

### Technical Field

The present invention relates to a three-dimensional modeling material, a three-dimensional model production method using the three-dimensional modeling material, and a three-dimensional model.

### Background Art

In recent years, various methods that can relatively easily produce a three-dimensional model having a complicated shape have been developed, and rapid prototyping and rapid manufacturing using such methods are attracting attention.

Conventionally, as a material used for the three-dimensional modeling, polyamide 12 and the like have been generally used from viewpoints of heat resistance, handleability, and the like. However, in recent years, it has been required to use a three-dimensional model for various uses, and application of a polyolefin-based polymer (polypropylene, polyethylene, or the like) having high strength, excellent chemical resistance, and the like to a three-dimensional modeling material has been studied.

Various methods have been proposed as a three-dimensional model production method. Examples of the methods include a fused deposition modeling method (hereinafter, also referred to as "FDM method") for melting a resin, extruding the melted resin into a filament, and laminating the filament-shaped resin to produce a three-dimensional model having a desired shape. Examples of the methods further include a powder bed melt-bonding method for spreading resin particles evenly to form a thin layer, irradiating a region of the thin layer to be cured (a pattern-shaped region in which a desired three-dimensional model is finely divided in a thickness direction) with a laser beam, and then selectively sintering or melt-bonding the resin particles (hereinafter, also simply referred to as "melt-bonding") to produce a three-dimensional model.

Examples of the methods further include a method for spreading resin particles evenly to form a thin layer, applying a bonding fluid containing an infrared light absorber or the like only to a region of the thin layer to be cured (a pattern-shaped region in which a desired three-dimensional model is finely divided in a thickness direction), then irradiating the region with infrared light, and heating and melting only a powder material in the region to which the bonding fluid has been applied to obtain a desired three-dimensional model (hereinafter, the method is also referred to as "MJF method").

Here, it is conceivable to use an olefin-based polymer as a three-dimensional modeling material. However, in the olefin-based polymer, most or all of polymers are constituted by aliphatic chains that are unlikely to interact with other compounds. Therefore, even when a colorant or an adhesive is applied to a three-dimensional model after the three-dimensional model is formed, the colorant and the adhesive are unlikely to be fixed, and it is difficult to process the three-dimensional model disadvantageously.

Meanwhile, it is also conceivable to mix an additive such as a coloring material or an ultraviolet absorber with the olefin-based polymer in advance to color the three-dimensional model or impart various functions to the three-dimensional model. However, the olefin-based polymer is unlikely to interact with such an additive, and the additive easily falls off from the three-dimensional model. Therefore, even by such a method, it is difficult to color the three-dimensional model made of the olefin-based polymer or to impart various functions to the three-dimensional model.

In addition, as another example of the three-dimensional model production method, a method for spreading resin particles to form a thin layer, applying a crosslinking agent for crosslinking with an organic material and a water-soluble resin to the thin layer, and curing only a powder material in a desired region to obtain a three-dimensional model has also been proposed (Patent Literature 1). Patent Literature 1 describes that an olefin-based polymer is used for the resin particles. However, in this method, it is necessary to crosslink the resin particles with each other with a crosslinking agent, and the olefin-based polymer has almost no reaction point with the crosslinking agent as described above. Therefore, it can be said that it is difficult to apply the olefin-based polymer to the method as described in Patent Literature 1. That is, it is also difficult to apply the olefin-based polymer to various three-dimensional modeling methods disadvantageously.

Moreover, from patent publication US 3,838,099, a UV stabilizing system for polymeric materials comprising phenyl benzoate and nickel or cobalt complexes of partially fluorinated beta diketone is known.

### Citation List

### Patent Literature

Patent Literature 1: JP 2016-175213 A

### Summary of Invention

### Technical Problem

Conventionally, when a molded product made of an olefin polymer (for example, an injection molded product) is colored or caused to adhere to another member, in general, various surface treatments such as formation of a primer layer on a surface, a corona treatment, and a plasma treatment have been performed. Therefore, it is conceivable to perform a similar treatment on a three-dimensional model obtained by various three-dimensional modeling methods.

However, when the primer layer is formed, it is necessary to apply and cure a primer layer composition, which complicates a production process. In addition, when a surface treatment is performed on a model, not only a production process is complicated, but also a large-scale apparatus is required. Therefore, it is desired to provide a three-dimensional model that can be easily processed without forming a primer layer or performing a surface treatment, and a three-dimensional modeling material for obtaining the three-dimensional model. It is also desired to provide a three-dimensional modeling material that can impart various functions to a three-dimensional model itself.

The present invention has been achieved in view of the above problems. That is, an object of the present invention is to provide a three-dimensional model that contains an olefin-based polymer and can be easily processed, and a three-dimensional modeling material for obtaining the three-dimensional model. Another object of the present invention is to provide a three-dimensional modeling material that contains an olefin-based polymer and can impart various functions to a three-dimensional model itself. Still another object of the present invention is to provide a three-dimensional model production method using the three-dimensional modeling material.

### Solution to Problem

According to a first aspect, the invention provides a three-dimensional modeling material in accordance with independent claim 1. According to a second aspect, the invention provides a three-dimensional model production method in accordance with independent claim 5. Further aspects are set forth in the dependent claims, the drawings, and the following description.

The present invention provides the following three-dimensional modeling materials.
[1] A three-dimensional modeling material for forming a three-dimensional model using thermal energy, the three-dimensional modeling material containing an olefin-based polymer and an organometallic complex, in which the organometallic complex contains a central metal, a ligand coordinated to the central metal, and a compatible group having a structure in which four or more carbon atoms bonded to the ligand are linearly arranged, and the central metal has one or more vacant orbitals.
[2] The three-dimensional modeling material according to [1], in which the compatible group of the organometallic complex is an aliphatic group having 4 or more carbon atoms.
[3] The three-dimensional modeling material according to [1] or [2], in which the central metal of the organometallic complex is a metal selected from the group consisting of Co, Rh, Ni, Pd, Pt, Cu, Zn, Ti, V, Cr, Mn, Fe, Zr, Nb, Mo, Hf, Ta, and W.
[4] The three-dimensional modeling material according to any one of [1] to [3], in which 95% or more of the total repeating units contained in the olefin-based polymer are olefin-derived repeating units.
   The present invention also provides the following three-dimensional model production methods.
[5] A three-dimensional model production method including: a melting step of melting the three-dimensional modeling material according to any one of the above [1] to [4] by thermal energy; and a thin layer forming step of extruding the melted three-dimensional modeling material into a filament to form a thin layer, in which the thin layer forming step is repeatedly performed to obtain a three-dimensional model.
[6] A three-dimensional model production method including: a thin layer forming step of forming a thin layer made of a powder material containing the three-dimensional modeling material according to any one of the above [1] to [4]; and a thermal energy irradiation step of selectively irradiating the thin layer with thermal energy to form a model layer in which the three-dimensional modeling material is bonded, in which the thin layer forming step and the thermal energy irradiation step are repeatedly performed to obtain a three-dimensional model.
[7] A three-dimensional model production method including: a thin layer forming step of forming a thin layer made of a powder material containing the three-dimensional modeling material according to any one of the above [1] to [4]; a fluid applying step of applying a bonding fluid containing an energy absorber to a specific region of the thin layer; and a thermal energy irradiation step of irradiating the thin layer with thermal energy to melt the three-dimensional modeling material in the application region of the bonding fluid to form a model layer, in which the thin layer forming step, the fluid applying step, and the thermal energy irradiation step are repeatedly performed to obtain a three-dimensional model.
[8] A three-dimensional model production method including a step of subjecting the three-dimensional modeling material according to any one of the above [1] to [4] to injection molding.
   The present invention also provides the following three-dimensional model.
[9] A three-dimensional model containing an olefin-based polymer and an organometallic complex, in which the organometallic complex contains a central metal, a ligand coordinated to the central metal, and a compatible group having a structure in which four or more carbon atoms bonded to the ligand are linearly arranged, and the central metal has one or more vacant orbitals.

### Advantageous Effects of Invention

A three-dimensional model obtained from the three-dimensional modeling material of the present invention can be colored on a surface thereof and can adhere to another member via an adhesive without forming a primer layer or performing a surface treatment thereon. In addition, according to the three-dimensional modeling material, a three-dimensional model itself can be colored, and various functions can be imparted to the three-dimensional model itself.

### Description of Embodiments

### 1. Three-dimensional modeling material

A three-dimensional modeling material of the present invention is a material for forming a three-dimensional model using thermal energy and is a solid resin composition mainly containing an olefin-based polymer. The three-dimensional modeling material can be used as a material for producing various products (three-dimensional models). Here, the formation of a three-dimensional model using thermal energy only needs to be a method for forming a three-dimensional model, the method including a step of irradiating a three-dimensional modeling material with thermal energy to melt the three-dimensional modeling material, and examples thereof include an injection molding method, an FDM method, a powder bed melt-bonding method, and an MJF method.

As described above, when a three-dimensional model is formed using a material containing only an olefin-based polymer, processability of the obtained three-dimensional model is very low disadvantageously. In addition, when a three-dimensional model is produced using an olefin-based polymer, it is difficult to impart various functions to the three-dimensional model itself disadvantageously.

Meanwhile, the three-dimensional modeling material of the present invention contains a specific organometallic complex together with an olefin-based polymer. The organometallic complex has a compatible group having a structure in which four or more carbon atoms bonded to a ligand are arranged on a straight chain. The compatible group has a high affinity with a main chain of the olefin-based polymer. Therefore, in the three-dimensional modeling material of the present invention, the organometallic complex and the olefin-based polymer are compatible at a molecular level, and the organometallic complex is uniformly present in the three-dimensional modeling material (olefin-based polymer).

Meanwhile, in the organometallic complex, the central metal has one or more vacant orbitals. Therefore, when a functional compound such as a coating material or an adhesive is applied to a surface of a three-dimensional model obtained from the three-dimensional modeling material of the present invention, the functional compound is coordinated to a vacant orbital of the organometallic complex, and fixability of the functional compound is very good. That is, for example, the surface of the three-dimensional model can be colored, or the three-dimensional model can adhere to another member or the like without forming a primer layer or performing a surface treatment.

When a functional compound that can be coordinated to the vacant orbital is added to the three-dimensional modeling material, the functional compound is coordinated to the organometallic complex and uniformly dispersed in the three-dimensional modeling material. The functional compound is coordinated to the organometallic complex, and therefore the functional compound is unlikely to be separated from the three-dimensional model. Therefore, various functions can be imparted to the three-dimensional model.

Hereinafter, each component contained in the three-dimensional modeling material will be described.

### 1-1. Olefin-based polymer

The olefin-based polymer contained in the three-dimensional modeling material only needs to be a polymer obtained by polymerizing an olefin (aliphatic unsaturated hydrocarbon) having at least one double bond. The three-dimensional modeling material may contain only one type of olefin-based polymer, or may contain two or more types thereof.

Here, the olefin-based polymer may partially contain a repeating unit derived from a monomer other than an olefin, but 95% or more of the total repeating units contained in the olefin-based polymer are preferably olefin-derived repeating units. The ratio of the olefin-derived repeating units is more preferably 97% or more, and still more preferably 99% or more. The structure of the repeating unit contained in the olefin-based polymer and the amount thereof are specified by ¹H-NMR analysis or the like.

Examples of the above olefin include a linear or branched α-olefin having 2 to 6 carbon atoms, such as ethylene, propylene, 1-butene, 1-hexene, or 4-methyl-1-pentene. The olefin-based polymer may be a homopolymer obtained by polymerizing only one type of these olefins, or may be a copolymer obtained by copolymerizing two or more types thereof.

Examples of a monomer other than the olefin include a vinyl-based monomer such as vinyl acetate, (meth)acrylic acid, or a (meth)acrylate. However, in the olefin-based polymer, the number of repeating units derived from a monomer other than the olefin is preferably small as described above. Note that when the olefin-based polymer is a copolymer of two or more types of monomers, the olefin-based polymer may be a random copolymer or a block copolymer.

The olefin-based polymer is preferably an ethylene homopolymer (polyethylene), a propylene homopolymer (polypropylene), a copolymer of ethylene and propylene, a copolymer of ethylene and an α-olefin having 4 or more carbon atoms, or a copolymer of propylene and an α-olefin having 4 or more carbon atoms, and is more preferably an ethylene homopolymer or a propylene homopolymer from a viewpoint of versatility or the like.

The melting temperature of the olefin-based polymer is preferably 80 to 200°C, more preferably 100 to 180°C, and still more preferably 110 to 160°C. When the melting temperature is 200°C or lower, a three-dimensional model is easily formed using thermal energy irradiation. Meanwhile, when the melting temperature is 80°C or higher, an obtained three-dimensional model has high heat resistance, and the three-dimensional model can be used for various uses. The melting temperature can be specified by a differential scanning calorimeter (DSC) or the like.

The three-dimensional modeling material contains the above olefin-based polymer preferably in an amount of 80 to 99% by mass, more preferably in an amount of 85 to 95% by mass, still more preferably in an amount of 90 to 95% by mass with respect to the total amount thereof. When the content of the olefin-based polymer is 80% by mass or more, three-dimensional modeling is easily performed, and a three-dimensional model having high strength is easily obtained. Meanwhile, when the content of the olefin-based polymer is 99% by mass or less, the amount of the organometallic complex is relatively sufficient, and various functions can be imparted to the three-dimensional model, and processability of the three-dimensional model can be improved.

### 1-2. Organometallic complex

The organometallic complex contained in the three-dimensional modeling material contains a central metal, a ligand coordinated to the central metal, and a compatible group having a structure in which four or more carbon atoms bonded to the ligand are linearly arranged. The central metal has one or more vacant orbitals. The three-dimensional modeling material may contain only one type of organometallic complex, or may contain two or more types thereof.

The central metal is not particularly limited as long as being a metal to which a ligand described later can be coordinated and which has an orbital (vacant orbital) to which a functional compound can be coordinated even after the ligand is coordinated.

Examples of such a central metal include Co, Rh, Ni, Pd, Pt, Cu, and Zn, each of which forms a four-coordinated complex with a ligand described later and has a vacant orbital even after coordination of the ligand. Among these metals, metals of the fourth period of the Long Periodic Table of the Elements, that is, Co, Cu, and Ni are preferable from a viewpoint that the closer a ligand is to a nucleus, the more stable a complex is.

Other examples of the central metal include Ti, V, Cr, Mn, Fe, Zr, Nb, Mo, Hf, Ta, and W, each of which forms an arbitrary coordination complex with a ligand described later and has a vacant orbital even after coordination of the ligand. Among these metals, metals of the fourth period of the Long Periodic Table of the Elements are preferable, and Ti and Cr are particularly preferable from a viewpoint that the closer a ligand is to a nucleus, the more stable a complex is.

The number of vacant orbitals after a ligand is coordinated to the central metal is not particularly limited as long as the number is 1 or more, but is generally 2, 4, or 6, and is preferably 2. Presence or absence of the vacant orbital can be specified from the type of central metal and the number of ligands.

Meanwhile, the structure of a ligand contained in the organometallic complex is not particularly limited, and is appropriately selected depending on the type of metal. The ligand may be a monodentate ligand, a bidentate ligand, or a tridentate or higher polydentate ligand. When a plurality of ligands is coordinated to the central metal, the ligands may be the same as or different from each other. Examples of the monodentate ligand include an acyl, a carbonyl, a thiocyanate, an isocyanate, a cyanate, an alkoxide, and a halogen atom. Examples of the bidentate ligand include acetylacetonate or a derivative thereof, and various carboxylic acids or derivatives thereof. Among these compounds, acetylacetonate or a derivative thereof is preferable.

At least one compatible group is bonded to the ligand, and the number of compatible groups bonded to one ligand may be one or more.

The compatible group bonded to the ligand only needs to be a group having a structure in which four or more carbon atoms are linearly arranged, and having no substituent.

The number of linearly arranged carbon atoms contained in the compatible group is 4 or more and 20 or less. When the compatible group has a structure in which four or more carbon atoms are linearly arranged, the affinity between the compatible group and the above-described olefin-based polymer is enhanced, and the organometallic complex is likely to be uniformly present in the three-dimensional modeling material (olefin-based polymer). Meanwhile, when the number of linearly arranged carbon atoms is 20 or less, the compatible groups are unlikely to be bent or curled. When the compatible group is bent or curled, the compatible group is unlikely to have a sufficient affinity with the olefin-based polymer, However, when the number of carbon atoms is 20 or less, such a phenomenon is unlikely to occur.

The compatible group is an aliphatic chain (hydrocarbon chain) having 4 or more carbon atoms and having no substituent.

Here, preferable examples of the structure of the organometallic complex include a complex represented by the following general formula.

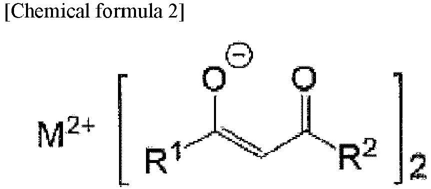

In the above general formula, M represents the above-described central metal, and is preferably Ti, Cr, Co, Ni, or Cu. R¹ represents the above-described compatible group, and preferably represents (CₙH2ₙ) -CH₃ (n represents an integer of 3 to 19). R ₂ represents an arbitrary group such as a hydrogen atom or a hydrocarbon group. Note that both R¹ and R² may be the above-described compatible groups.

The three-dimensional modeling material contains the above organometallic complex preferably in an amount of 0.1 to 30 parts by mass, more preferably in an amount of 1 to 20 parts by mass, still more preferably in an amount of 3 to 10 parts by mass with respect to 100 parts by mass of the above-described olefin-based polymer. In a case where the content of the organometallic complex is 0.1 parts by mass or more with respect to 100 parts by mass of the olefin-based polymer, when a functional compound described later is applied to a surface of a three-dimensional model after the three-dimensional model is produced, fixability of the functional compound is good. In addition, when the three-dimensional modeling material contains a functional compound, the functional compound is unlikely to be separated from the three-dimensional model, and the function of the functional compound is easily exhibited. Meanwhile, in a case where the amount of the organometallic complex is 30 parts by mass or less, the amount of the olefin-based polymer is relatively sufficient, and it is easy to obtain a three-dimensional model having high strength and high versatility.

### 1-3. Other components

The three-dimensional modeling material may contain a component other than the above-described olefin-based polymer and organometallic complex as long as the object and effect of the present invention are not impaired. Examples of the other component include a functional compound, a charge control agent, and a fluidizing agent.

Here, in the present invention, the functional compound is a compound containing a group (atom, molecular structure, or the like) X that can be coordinated to a vacant orbital of the central metal of the organometallic complex, and a functional unit Z for exhibiting various functions. A function imparted by the functional compound is not particularly limited, and can be appropriately selected depending on use or the like of a three-dimensional model, and may be, for example, decorativeness (coloring or the like), ultraviolet light absorption, or elasticity. The three-dimensional modeling material may contain only one type of functional compound, or may contain two or more types thereof. When the three-dimensional modeling material contains two or more types of functional compounds, these functional compounds may be the same type of compounds or may be compounds that impart functions different from each other.

The group X of the functional compound that can be coordinated to a vacant orbital of the organic metal is appropriately selected depending on the type of the organometallic complex and the like. Examples of the group X that can be coordinated include a cyano group (CN), a carbonyl group (CO), a PO group, and an SO group.

Meanwhile, the functional unit Z of the functional compound only needs to have a structure for exhibiting various functions, and can have a known structure according to a desired function. For example, the functional unit Z may be a polymer-derived group or a group that is a coupling reaction or a polymerization reaction.

When the functional compound is a compound that imparts ultraviolet light absorption to a three-dimensional model, the functional compound can be, for example, a compound obtained by introducing the above-described group X that can be coordinated to the vacant orbital of the organic metal into a known ultraviolet light absorber. When the functional compound is a compound for coloring a three-dimensional model, the functional compound can be, for example, a compound obtained by introducing the above-described group X that can be coordinated to the vacant orbital into a pigment such as carbon black, aniline black, acetylene black, Naphthol Yellow, Hansa Yellow, Rhodamine Lake, red iron oxide, Phthalocyanine Blue, Indanthrene Blue, or Titanium White, or a compound obtained by introducing the above-described group X that can be coordinated to the vacant orbital into an azo dye, an anthraquinone-based dye, a xanthene-based dye, or a methine-based dye. When the functional compound is a compound that imparts elasticity to a three-dimensional model, the functional compound can be, for example, a compound obtained by introducing the above-described group X that can be coordinated to the vacant orbital into an elastic polymer such as a nitrile rubber (NBS).

The three-dimensional modeling material contains the functional compound preferably in an amount of 0.1 to 30% by mass, more preferably in an amount of 0.5 to 20% by mass, still more preferably in an amount of 1 to 20% by mass with respect to the total amount thereof. When the amount of the functional compound with respect to the total amount of the three-dimensional modeling material is within the above range, the function of the functional compound is easily exhibited sufficiently in an obtained three-dimensional model.

A charge control agent contained in the three-dimensional modeling material only needs to be a compound that can suppress charging of the three-dimensional modeling material during production of a three-dimensional model, and can be a known charge control agent. The charge control agent may be a negative polarity control agent or a positive polarity control agent. The three-dimensional modeling material may contain only one type of charge control agent, or may contain two or more types thereof.

Examples of the negative polarity control agent include a metal-containing azo dye, tetraphenylborate, a metal chelate of alkylsalicylic acid, a chlorinated polyester, a polyester with excess acid groups, a chlorinated polyolefin, and a metal salt of fatty acid. Examples of the positive polarity control agent include a nigrosine-based electron-donating dye.

The three-dimensional modeling material contains the charge control agent preferably in an amount of 0.01 to 5% by mass, more preferably in an amount of 0.1 to 3% by mass, still more preferably in an amount of 0.5 to 1% by mass with respect to the total amount thereof. When the amount of the charge control agent is within the above range, the three-dimensional modeling material is unlikely to be charged, and a three-dimensional model can be produced with high accuracy.

When the three-dimensional modeling material is in a form of particles, the three-dimensional modeling material may contain a fluidizing agent that prevents aggregation of the particles and secures fluidity. The three-dimensional modeling material may contain only one type of fluidizing agent, or may contain two or more types thereof.

The fluidizing agent may be formed of either organic particles or inorganic particles, or may be formed of composite particles of an organic material and an inorganic material. Examples of the organic particles include polymethylmethacrylate particles. Examples of the inorganic particles include silica particles, alumina particles, titania particles, zinc oxide particles, and hydroxyapatite particles. The fluidizing agent is preferably formed of inorganic particles, and particularly preferably formed of silica particles.

The average particle size of the fluidizing agent is preferably 1 µm or less, more preferably 5 to 1000 nm, and still more preferably 5 to 500 nm. The average particle size is a volume average particle size measured by a dynamic light scattering method. The volume average particle size can be measured with a laser diffraction type particle size distribution measuring device (MT3300EXII manufactured by Microtrac Bell) equipped with a wet disperser.

The three-dimensional modeling material is preferably 0.1 to 5 parts by mass, more preferably 0.1 to 3 parts by mass, still more preferably 0.1 to 0.5 parts by mass, and particularly preferably 0.3 to 0.5 parts by mass with respect to 100 parts by mass of the olefin-based polymer.

### 1-4. Physical properties of three-dimensional modeling material and production method thereof

The above-described three-dimensional modeling material only needs to be solid, and the shape thereof is appropriately selected depending on a three-dimensional modeling method. For example, when a three-dimensional model is produced by injection molding, the shape of the three-dimensional modeling material is not particularly limited. When a three-dimensional model is produced by an FDM method, the three-dimensional modeling material may be in a form of particles or pellets, but is preferably in a form of filaments each having a diameter of 0.5 mm to 10 mm from a viewpoint of handleability. The filament-shaped three-dimensional modeling material may have fine irregularities on a surface thereof, if necessary, such that the three-dimensional modeling material can be sufficiently held in a three-dimensional modeling apparatus. The filament-shaped three-dimensional modeling material may be wound around a bobbin or the like.

Furthermore, when a three-dimensional model is produced by a powder bed melt-bonding method or an MJF method, the three-dimensional modeling material can be formed of resin particles having an average particle size of 20 µm to 200 µm. The average particle size is more preferably 30 to 85 µm. When the average particle size of the three-dimensional modeling material is 200 µm or less, a three-dimensional model having a fine structure can be produced. Meanwhile, the average particle size of the three-dimensional modeling material is preferably 20 µm or more from viewpoints of sufficient fluidity, good production cost, good handleability, and the like. The average particle size is a volume average particle size measured by a dynamic light scattering method. The volume average particle size can be measured with a laser diffraction type particle size distribution measuring device (MT3300EXII manufactured by Microtrac Bell) equipped with a wet disperser.

A method for producing the three-dimensional modeling material is not particularly limited, and can be appropriately selected according to the desired shape of the three-dimensional modeling material. When a massive three-dimensional modeling material is formed, the massive three-dimensional modeling material can be produced by stirring and mixing the above-described olefin-based polymer and organometallic complex, and if necessary, other components while heating these, and cooling these. Furthermore, by pulverizing the resulting three-dimensional modeling material, a particle-shaped three-dimensional modeling material can be produced. At this time, in order to make the average particle size of the three-dimensional modeling material uniform, classification or the like may be performed.

A filament-shaped three-dimensional modeling material can be produced by stirring and mixing the above-described olefin-based polymer and organometallic complex, and if necessary, other components while heating these, and molding the resulting mixture into a filament by a known method such as extrusion molding. The temperature at the time of extrusion molding is appropriately selected depending on the melting temperature of the olefin-based polymer.

### 2. Three-dimensional model production method

As described above, the above-described three-dimensional modeling material can be used in an injection molding method, an FDM method, a powder bed melt-bonding method, an MJF method, or the like. Hereinafter, three-dimensional modeling methods using the above three-dimensional modeling material will be described, but the present invention is not limited to these methods. For example, the three-dimensional modeling methods using the above three-dimensional modeling material can also be applied to a three-dimensional modeling method as described in Patent Literature 1 described above.

### 2-1. Case where three-dimensional model is produced by injection molding method

When a three-dimensional model is produced by injection molding, the three-dimensional model can be produced in a similar manner to a known injection molding method except that the above-described three-dimensional modeling material is used. For example, the above-described three-dimensional modeling material is supplied to a known injection molding apparatus and melted. Then, the melted three-dimensional modeling material is filled in a mold and then solidified to obtain a three-dimensional model.

The temperature at which the three-dimensional modeling material is melted (cylinder temperature of the injection molding apparatus) is appropriately selected depending on the melting temperature of the above-described olefin-based polymer. An injection molding speed, a pressure at the time of injection molding, and the like can be similar to general production conditions for a three-dimensional model.

### 2-2. Case where three-dimensional model is produced by FDM method

When a three-dimensional model is produced by an FDM method, the three-dimensional model can be produced in a similar manner to a known FDM method except that the above-described three-dimensional modeling material is used. Specifically, a method including: (1) a melting step of melting the above-described three-dimensional modeling material by thermal energy; and (2) a thin layer forming step of extruding the melted three-dimensional modeling material into a filament to form a thin layer can be used. By repeating step (2) (and step (1) if necessary) a plurality of times to laminate thin layers, a three-dimensional model can be produced. Note that the three-dimensional model production method may include another step, if necessary.

### •Melting step (step (1))

In this step, at least a part of the three-dimensional modeling material is melted. For example, the three-dimensional modeling material is melted by a heating melter of a three-dimensional modeling apparatus including an extrusion head and the heating melter. The shape of the three-dimensional modeling material used is not particularly limited as long as the three-dimensional modeling material can be extruded into a filament from the extrusion head in the thin layer forming step described later, and may be, for example, in a form of particles or pellets. However, a filament-shaped three-dimensional modeling material is preferably used from a viewpoint that feeding to the heating melter is easily stable or the like. Heating by the heating melter is preferably performed at a temperature equal to or higher than the melting temperature of the above-described olefin-based polymer, and more preferably at a temperature higher than the melting temperature by 10°C or more.

### •Thin layer forming step (step (2))

In this step, the melted three-dimensional modeling material is extruded into a filament to form a thin layer made of the three-dimensional modeling material. For example, the three-dimensional modeling material melted in the above-described melting step is extruded into a filament from a nozzle of the extrusion head of the three-dimensional modeling apparatus onto a modeling stage to form a thin layer in a desired shape.

The diameter of the filament-shaped three-dimensional modeling material discharged from the extrusion head is preferably 0.01 to 1 mm, and more preferably 0.02 to 0.8 mm. The diameter of the discharged three-dimensional modeling material corresponds to the thickness of the thin layer. Therefore, by setting the thickness of the three-dimensional modeling material within the above range, reproducibility of an obtained three-dimensional model tends to be good.

The extrusion speed of the three-dimensional modeling material is preferably 20 mm/sec or more, more preferably 30 mm/sec or more, and still more preferably 50 mm/sec or more. Meanwhile, the extrusion speed is usually 200 mm/sec or less.

### 2-3. Case where three-dimensional model is produced by powder bed melt-bonding method

When a three-dimensional model is produced by a powder bed melt-bonding method, the three-dimensional model can be produced in a similar manner to a usual powder bed melt-bonding method except that the above-described three-dimensional modeling material is used. Specifically, a method including: (1) a thin layer forming step of forming a thin layer containing a particle-shaped three-dimensional modeling material; and (2) a thermal energy irradiation step of selectively irradiating the thin layer containing the three-dimensional modeling material with thermal energy (here, a laser beam) to form a model layer in which particles are melt-bonded to each other can be used. By repeating steps (1) and (2) a plurality of times to laminate model layers, a desired three-dimensional model can be produced. Note that the three-dimensional model production method may include another step, if necessary, and may include, for example, a step of preheating the three-dimensional modeling material.

### •Thin layer forming step (step (1))

In this step, a thin layer containing a particle-shaped three-dimensional modeling material is formed. For example, the three-dimensional modeling material supplied from a powder supply unit of a three-dimensional modeling apparatus is spread evenly on a modeling stage with a recoat blade. A thin layer may be formed directly on the modeling stage or may be formed on the three-dimensional modeling material that has been spread or on a model layer that has been formed.

The thickness of the thin layer is the same as the desired thickness of a model layer. The thickness of the thin layer can be arbitrarily set depending on accuracy of a three-dimensional model to be produced, but is usually 0.01 mm or more and 0.30 mm or less. By setting the thickness of the thin layer to 0.01 mm or more, a model layer that has been produced can be prevented from being melted by a laser beam irradiation for forming a next model layer. Furthermore, powder can be spread uniformly. By setting the thickness of the thin layer to 0.30 mm or less, energy of a laser beam can be conducted to a lower portion of the thin layer, and the three-dimensional modeling material constituting the thin layer can be sufficiently melt-bonded in the entire thickness direction. The thickness of the thin layer is more preferably 0.01 mm or more and 0.10 mm or less from the viewpoint. The thickness of the thin layer is preferably set such that a difference between the thickness of the thin layer and a laser beam spot diameter described later is within 0.10 mm from a viewpoint of sufficiently melt-bonding particles in the entire thickness direction of the thin layer to make occurrence of cracking in the model layer more difficult.

When a three-dimensional model is produced by the method, a laser absorber may be mixed with the above-described three-dimensional modeling material. Examples of the laser absorber that can be mixed include a carbon powder, a nylon resin powder, a pigment, and a dye. The amount of the laser absorber can be appropriately set within a range in which melt-bonding of the three-dimensional modeling material is easy. For example, the amount of the laser absorber can be more than 0% by mass and less than 3% by mass with respect to the total mass of the three-dimensional modeling material. The laser absorber may be used singly or in combination of two or more types thereof.

### •Thermal energy irradiation step (step (2))

In this step, among the thin layers containing the three-dimensional modeling material, a position where a model layer is to be formed is selectively irradiated with thermal energy (here, a laser beam) to melt-bond the three-dimensional modeling material at the position irradiated with thermal energy. The melted three-dimensional modeling material is melted with the adjacent three-dimensional modeling material to form a melt-bonded body, and becomes a model layer. At this time, the three-dimensional modeling material that has received energy of the laser beam is also melt-bonded to a model layer that has been formed. Therefore, adhesion between adjacent layers also occurs.

The wavelength of the laser beam only needs to be set within a wavelength range absorbed by the three-dimensional modeling material. At this time, a difference between the wavelength of the laser beam and a wavelength at which absorptivity of the three-dimensional modeling material is the highest is preferably small. However, in general, the olefin-based polymer absorbs light in various wavelength ranges, and therefore a laser beam having a wide wavelength band such as a CO ₂ laser is preferably used. For example, the wavelength of the laser beam can be, for example, 0.8 µm or more and 12 µm or less.

It is only required to set power at the time of laser beam output within a range where the three-dimensional modeling material is sufficiently melt-bonded at a laser beam scanning speed described later. Specifically, the power can be 5.0 W or more and 60 W or less. The power at the time of laser beam output is preferably 30 W or less, and more preferably 20 W or less from a viewpoint of lowering energy of the laser beam, lowering production cost, and simplifying the configuration of a production apparatus.

It is only required to set the laser beam scanning speed within a range not increasing production cost and not making an apparatus configuration excessively complicated. Specifically, the laser beam scanning speed is preferably 1 m/sec or more and 10 m/sec or less, more preferably 2 m/sec or more and 8 m/sec or less, and still more preferably 3 m/sec or more and 7 m/sec or less.

A beam diameter of the laser beam can be appropriately set depending on accuracy of a three-dimensional model to be produced.

### •Regarding repetition of steps (1) and (2)

In the production of a three-dimensional model, the above-described steps (1) and (2) are repeated an arbitrary number of times. As a result, the model layers are laminated to obtain a desired three-dimensional model.

### •Preheating step

In the three-dimensional model production method by the powder bed melt-bonding method, a step of preheating the three-dimensional modeling material may be performed. The three-dimensional modeling material may be preheated after the thin layer formation (step (1)) or before the thin layer formation (step (1)). The three-dimensional modeling material may be preheated after and before the thin layer formation (step (1)).

A preheating temperature is set to a temperature lower than the melting temperature of the olefin-based polymer such that the three-dimensional modeling materials are not melt-bonded to each other. The preheating temperature is appropriately selected depending on the melting temperature of the olefin-based polymer, and can be, for example, 80°C or higher and 200°C or lower, more preferably 100°C or higher and 180°C or lower, and still more preferably 100°C or higher and 150°C or lower.

At this time, heating time is preferably 1 to 30 seconds, and more preferably 5 to 20 seconds. By performing preheating at the above temperature for the above time, it is possible to shorten a time until the three-dimensional modeling material is melted during laser energy irradiation, and it is possible to produce a three-dimensional model with a small amount of laser energy.

### •Others

Note that at least step (2) is preferably performed under reduced pressure or in an inert gas atmosphere from a viewpoint of preventing reduction in strength of an obtained three-dimensional model due to oxidation or the like of the three-dimensional modeling material during melt-bonding. A pressure during depressurization is preferably 10⁻² Pa or less, and more preferably 10⁻³ Pa or less. Examples of an inert gas that can be used include a nitrogen gas and a noble gas. Among these inert gases, a nitrogen (N ₂) gas, a helium (He) gas, and an argon (Ar) gas are preferable from a viewpoint of availability. Both of steps (1) and (2) are preferably performed under reduced pressure or in an inert gas atmosphere from a viewpoint of simplifying a production process.

### 2-4. Case where three-dimensional model is produced by MJF method

When a three-dimensional model is produced by an MJF method, the three-dimensional model can be produced in a similar manner to a usual MJF method except that the above-described three-dimensional modeling material is used. Specifically, the method includes: (1) a thin layer forming step of forming a thin layer containing the above-described three-dimensional modeling material; (2) a fluid applying step of applying a bonding fluid containing an energy absorber to a specific region of the thin layer; and (3) a thermal energy irradiation step of irradiating the thin layer after the fluid applying step with thermal energy to melt the three-dimensional modeling material in the application region of the bonding fluid to form a model layer. Note that the three-dimensional model production method may include another step, if necessary, and may include, for example, a step of preheating the three-dimensional modeling material.

### •Thin layer forming step (step (1))

In this step, a thin layer mainly containing the above-described three-dimensional modeling material is formed. A method for forming the thin layer is not particularly limited as long as a layer having a desired thickness can be formed. For example, this step can be a step of spreading the three-dimensional modeling material supplied from a three-dimensional modeling material supply unit of a three-dimensional modeling apparatus evenly on a modeling stage with a recoat blade. A thin layer may be formed directly on the modeling stage or may be formed on the three-dimensional modeling material that has been spread or on a model layer that has been formed. A recoating speed can be similar a recoating speed in the above-described powder bed melt-bonding method.

The thickness of the thin layer is the same as the desired thickness of a model layer. The thickness of the thin layer can be arbitrarily set depending on accuracy of a three-dimensional model to be produced, but is usually 0.01 mm or more and 0.30 mm or less. By setting the thickness of the thin layer to 0.01 mm or more, a model layer that has been produced can be prevented from being melted by thermal energy irradiation for forming a new model layer (thermal energy irradiation in the thermal energy irradiation step described later). When the thickness of the thin layer is 0.01 mm or more, the three-dimensional modeling material is easily spread uniformly. By setting the thickness of the thin layer to 0.30 mm or less, thermal energy (here, infrared light) can be conducted to a lower portion of the thin layer in the thermal energy irradiation step (step (3)) described later. The thickness of the thin layer is more preferably 0.01 mm or more and 0.20 mm or less from the viewpoint.

### •Fluid applying step (step (2))

In this step, a bonding fluid containing an energy absorber is applied to a specific region of the thin layer formed in the thin layer forming step. At this time, a peeling fluid having less energy absorption than the bonding fluid may be applied to a region to which the bonding fluid is not applied, if necessary. Specifically, the bonding fluid may be selectively applied to a position where a model layer is to be formed, and the peeling fluid may be applied to a region where the model layer is not to be formed. By applying the peeling fluid adjacent to the surroundings of the region to which the bonding fluid is applied, the three-dimensional modeling material is unlikely to be melt-bonded in the region to which the peeling fluid has been applied. Either the bonding fluid or the peeling fluid may be applied first, but the bonding fluid is preferably applied first from a viewpoint of dimensional accuracy of an obtained three-dimensional model.

A method for applying the bonding fluid and the peeling fluid is not particularly limited, and examples thereof include application with a dispenser, application by an inkjet method, and spray application. However, at least one of the bonding fluid and the peeling fluid is preferably applied by the inkjet method, and both of these are more preferably applied by the inkjet method from a viewpoint that the bonding fluid and the peeling fluid can be applied to a desired region at high speed.

The application amounts of the bonding fluid and the peeling fluid are each preferably 0.1 to 50 µL, and more preferably 0.2 to 40 µL per mm ³ of the thin layer. When the application amount of each of the bonding fluid and the peeling fluid is within the above range, the three-dimensional modeling material in the region where the model layer is to be formed and the three-dimensional modeling material in the region where the model layer is not to be formed can be sufficiently impregnated with the bonding fluid and the peeling fluid, respectively, and a three-dimensional model having good dimensional accuracy can be formed.

The bonding fluid applied in this step can be similar to a conventional bonding fluid used in the MJF method, and can be, for example, a composition containing at least an energy absorber and a solvent. The bonding fluid may contain a known dispersant or the like, if necessary.

The energy absorber is not particularly limited as long as the energy absorber can absorb thermal energy emitted in the thermal energy irradiation step (step (3)) described later, and can efficiently raise the temperature of the region to which the bonding fluid has been applied. Specific examples of the energy absorber include an infrared absorber such as carbon black, indium tin oxide (ITO), or antimony tin oxide (ATO), a cyanine dye, a phthalocyanine dye containing aluminum or zinc as a center thereof; various naphthalocyanine compounds, a nickel dithiolene complex having a flat surface tetracoordinate structure, and an infrared absorbing dye such as a squalium dye, a quinone-based compound, a diimmonium compound, or an azo compound. Among these compounds, an infrared absorber is preferable, and carbon black is more preferable from viewpoints of versatility and ability to efficiently raise the temperature of the region to which the bonding fluid has been applied.

The shape of the energy absorber is not particularly limited, but the energy absorber is preferably in a form of particles. The average particle size of the energy absorber is preferably 0.1 to 1.0 µm, and more preferably 0.1 to 0.5 µm. When the average particle size of the energy absorber is excessively large, the energy absorber is unlikely to enter a gap between resin particles when the bonding fluid is applied onto the thin layer. Meanwhile, when the average particle size of the energy absorber is 0.1 µm or more, heat can be efficiently transferred to resin particles in the energy irradiation step described later, and surrounding resin particles can be melted.

The bonding fluid contains the energy absorber preferably in an amount of 0.1 to 10.0% by mass, more preferably in an amount of 1.0 to 5.0% by mass. When the amount of the energy absorber is 0.1% by mass or more, it is possible to sufficiently raise the temperature of the region to which the bonding fluid has been applied in the thermal energy irradiation step described later. Meanwhile, when the amount of the energy absorber is 10.0% by mass or less, for example, the energy absorber is less likely to aggregate in the bonding fluid, and application stability of the bonding fluid is likely to be improved.

Meanwhile, the solvent is not particularly limited as long as the solvent can disperse the energy absorber and is unlikely to dissolve resin particles (particularly the olefin-based polymer) in the three-dimensional modeling material, and can be, for example, water.

The bonding fluid contains the above solvent preferably in an amount of 90.0 to 99.9% by mass, more preferably in an amount of 95.0 to 99.0% by mass. When the amount of the solvent in the bonding fluid is 90.0% by mass or more, fluidity of the bonding fluid is high, and the bonding fluid is easily applied by, for example, an inkjet method.

The viscosity of the bonding fluid is preferably 0.5 to 50.0 mPa•s, and more preferably 1.0 to 20.0 mPa•s. When the viscosity of the bonding fluid is 0.5 mPa•s or more, diffusion is easily suppressed when the bonding fluid is applied to the thin layer. Meanwhile, when the viscosity of the bonding fluid is 50.0 mPa•s or less, application stability of the bonding fluid is likely to be improved.

Meanwhile, the peeling fluid to be applied in this step only needs to be a fluid that absorbs relatively less energy than the bonding fluid, and can be, for example, a fluid containing water as a main component.

The peeling fluid contains water preferably in an amount of 90% by mass or more, more preferably in an amount of 95% by mass or more. When the amount of water in the peeling fluid is 90% by mass or more, the peeling fluid is easily applied by, for example, an inkjet method.

### •Thermal energy irradiation step (step (3))

In this step, the thin layer after the fluid applying step, that is, the thin layer to which the bonding fluid and, if necessary, the peeling fluid have been applied is collectively irradiated with thermal energy. At this time, in the region to which the bonding fluid has been applied, the energy absorber absorbs the thermal energy, and the temperature of the region partially rises. Then, only the three-dimensional modeling material in the region is melted to form a model layer.

The type of thermal energy to be emitted in this step is appropriately selected depending on the type of energy absorber contained in the bonding fluid. Specific examples of the thermal energy include infrared light and white light. Among these types of light, infrared light is preferable, light having a wavelength of 780 to 3000 nm is more preferable, and light having a wavelength of 800 to 2500 nm is still more preferable from a viewpoint that the olefin-based polymer in the three-dimensional modeling material can be efficiently melted in the region to which the bonding fluid has been applied, while the temperature of the thin layer is unlikely to rise in the region to which the peeling fluid has been applied.

Thermal energy irradiation time in this step is appropriately selected depending on the type of the olefin-based polymer contained in the three-dimensional modeling material, but is usually preferably 5 to 60 seconds, and more preferably 10 to 30 seconds. By setting the thermal energy irradiation time to 5 seconds or more, the olefin-based polymer can be sufficiently melted, and the three-dimensional modeling material can be bonded. Meanwhile, by setting the thermal energy irradiation time to 60 seconds or less, a three-dimensional model can be efficiently produced.

### •Preheating step

Also in the MJF method, a step of preheating the three-dimensional modeling material may be performed. The three-dimensional modeling material may be preheated after the thin layer formation (step (1)) or before the thin layer formation (step (1)). The three-dimensional modeling material may be preheated after and before the thin layer formation (step (1)). By performing preheating, the amount of energy to be emitted in the thermal energy irradiation step (step (3)) can be reduced. Furthermore, a model layer can be efficiently formed in a short time. The preheating temperature is preferably lower than the melting temperature of the olefin-based polymer in the three-dimensional modeling material, and lower than the boiling point of a solvent contained in the bonding fluid or the peeling fluid to be applied in the fluid applying step (step (2)). Specifically, the preheating temperature is preferably 50°C to 5°C lower and more preferably 30°C to 5°C lower than the melting point of the olefin-based polymer and the boiling point of the solvent contained in the bonding fluid and the peeling fluid. At this time, heating time is preferably 1 to 60 seconds, and more preferably 3 to 20 seconds. By setting the heating temperature and the heating time within the above ranges, the energy irradiation amount in the thermal energy irradiation step (step (3)) can be reduced.

### 3. Three-dimensional model and use thereof

A three-dimensional model obtained by the above-described method contains at least the olefin-based polymer and the above-described organometallic complex. Therefore, when a functional compound such as a coating material or an adhesive is applied to a surface of the three-dimensional model, the functional compound is coordinated to a vacant orbital of the organometallic complex. As a result, the functional compound is easily fixed to the surface of the three-dimensional model. For example, the surface of the three-dimensional model can be colored, or the three-dimensional model can adhere to another member via an adhesive.

Note that the functional compound to be applied to the surface of the three-dimensional model only needs to be a compound containing the group (atom, molecular structure, or the like) X that can be coordinated to a vacant orbital of the central metal of the organometallic complex, and the functional unit Z for exhibiting various functions, and for example, can be a compound that imparts decorativeness (coloring or the like), ultraviolet light absorption, elasticity, adhesiveness, and the like to the three-dimensional model. The functional compound that imparts decorativeness (coloring or the like), ultraviolet light absorption, and elasticity can be similar to the functional compound that may be contained in the above-described three-dimensional modeling material.

Meanwhile, the functional compound that imparts adhesiveness to the three-dimensional model can be, for example, a compound obtained by introducing the above-described group X that can be coordinated to the vacant orbital of the organic metal into a known adhesive. Specifically, the functional compound that imparts adhesiveness to the three-dimensional model can be cyanoacrylate or the like.

### Examples

Specific Examples of the present invention will be described below. Note that the scope of the present invention is not construed as being limited by these Examples.

### [Material]

The following materials were used for Examples, Comparative Examples, and evaluation.

### (Olefin-based polymer)

- Polypropylene (J105G manufactured by Prime Polymer Co., Ltd., propylene homopolymer)
- Polyethylene (1300J manufactured by Prime Polymer Co., Ltd., ethylene homopolymer)

### (Metal complex)

- Cobalt complex A represented by the following general formula (vacant orbital: 2)

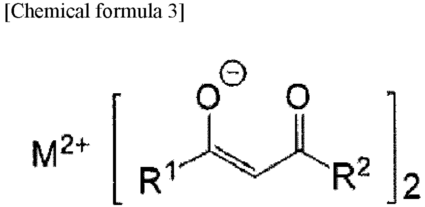

In the above general formula, M represents Co, R¹ represents (CH₂)₃-CH₃ (compatible group), and R ² represents H.
- Cobalt complex B represented by the following general formula (vacant orbital: 2)

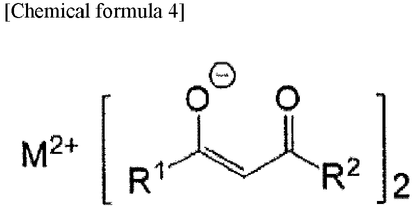

In the above general formula, M represents Co, R¹ represents (CH₂)₇-CH₃ (compatible group), and R² represents (CH₂)₈-CH₃ (compatible group).
- Copper complex represented by the following general formula (vacant orbital: 2)

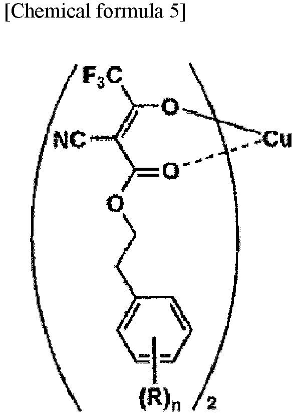

In the above general formula, R represents C₁₄H₂₉ (compatible group) and n represents 1.

### (Functional compound)

- Functional compound a represented by the following formula

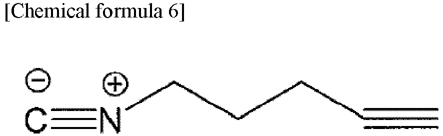

The functional compound a can be prepared by the method described in the following literature. Synthesis of Functional Polycaprolactones via Passerini Multicomponent Polymerization of 6-Oxohexanoic Acid and Isocyanides, Zhang, Jian; Zhang, Mei; Du, Fu-Sheng; Li, Zi-Chen - Macromolecules, 2016, vol. 49, # 7, p. 2592 - 2600
- Functional compound b represented by the following formula

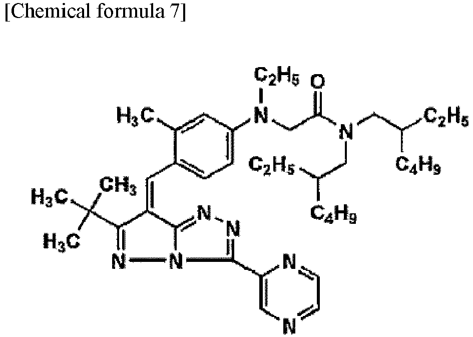

### [Example 1-1]

### (Production of three-dimensional modeling material)

100 parts by mass of polypropylene resin and 5 parts by mass of cobalt complex A were mixed, and the mixed pellets were put in an inlet of a 65ϕ extruder. Then, a screw was rotated while heating, and the resin was sent out while being melted. Then, the composition was extruded from a mold at a tip of the extruder, and cooled and solidified in a cooling water tank to obtain filament 1-1 (three-dimensional modeling material) having a diameter of 1.75 mm.

Note that the cylinder temperature of the extruder was set to 150 to 180°C for the die, 160 to 200°C for a measuring unit, 160 to 200°C for a compression unit, and 150 to 180°C for a supply unit. The limit temperature was set to 240°C, the temperature of cooling water in the cooling water tank was set to 8 to 15°C, a distance between the die and a sizer was set to 2 to 5 cm, and a withdrawal ratio was set to 0.87 to 0.92. A dry vacuum method was used as a sizing method.

### (Production of three-dimensional model)

The above-described filament 1-1 was supplied to a fused deposition modeling (FDM) three-dimensional printing apparatus, and two 10 cm square cubic three-dimensional models were produced with the three-dimensional printing apparatus. The temperature of a heater (filament heating temperature) during three-dimensional modeling in the three-dimensional printing apparatus was 200°C, and the processing speed was 20 to 40 mm/s. The lamination height was 0.1 mm.

### [Example 1-2]

A three-dimensional model was obtained in a similar manner to Example 1-1 except that filament 1-2 was produced using cobalt complex B instead of cobalt complex A when the three-dimensional modeling material was produced.

### [Example 1-3]

A three-dimensional model was obtained in a similar manner to Example 1-1 except that filament 1-3 was produced using a polyethylene resin instead of a polypropylene resin when the three-dimensional modeling material was produced.

### [Comparative Example 1-1]

A three-dimensional model was obtained in a similar manner to Example 1-1 except that filament 1-4 was produced without using cobalt complex A when the three-dimensional modeling material was produced.

### [Evaluation 1]

The functional compound a dissolved in toluene was applied with a brush to one surface of each of the cubic three-dimensional models produced in Examples and Comparative Example such that a film thickness after drying was 20 µm. Then, the application surfaces of the two three-dimensional models were overlapped with each other. Then, the resulting product was allowed to stand for one hour in this state, and then a tensile test was performed with Tensilon RFT-1250. The tensile speed at this time was 50 mm/s. Table 1 illustrates results thereof. A case where a sample was lifted without being peeled was marked with ∘, and a case where a sample was peeled and was not lifted was marked with x.

Note that as Reference Example, three-dimensional models were produced in a similar manner to Example 1-1, surfaces thereof were overlapped with each other while the functional compound was not applied thereto, and a tensile test was performed similarly. Table 1 also illustrates results thereof.

**[Table 1]**

| | Three-dimensional modeling material | | Functional compound | Evaluation result |
|---|---|---|---|---|
| | Olefin-based polymer | Organometallic complex | | |
| Example 1-1 | Polypropylene | Cobalt complex A | Functional compound a | ○ |
| Example 1-2 | Polypropylene | Cobalt complex B | Functional compound a | ○ |
| Example 1-3 | Polyethylene | Cobalt complex A | Functional compound a | ○ |
| Reference Example | Polypropylene | Cobalt complex A | - | × |
| Comparative Example 1-1 | Polypropylene | - | Functional compound a | × |

As illustrated in Table 1 above, when the olefin-based polymer and the organometallic complex having a specific structure were contained, adhesion was possible via the functional compound a (Examples 1-1 to 1-3). The results indicate that the three-dimensional modeling material of the present invention makes adhesion possible without forming a primer layer or performing a surface treatment, and makes processing very easy. Note that in the above Examples, the same type of three-dimensional models adhered to each other, but the three-dimensional model can easily adhere to a different type of three-dimensional model (for example, a resin other than the olefin-based polymer or a metal).

Meanwhile, when the three-dimensional modeling material did not contain the above-described organometallic complex, the two three-dimensional modeling materials could not adhere to each other even when the functional compound a was applied thereto (Comparative Example 1-1).

### [Example 2-1]

A three-dimensional model was obtained in a similar manner to Example 1-1 except that filament 2-1 was produced using a copper complex instead of cobalt complex A when the three-dimensional modeling material was produced.

### [Comparative Example 2-1]

A three-dimensional model was obtained in a similar manner to Example 2-1 except that filament 2-2 was produced without using a copper complex when the three-dimensional modeling material was produced.

### [Evaluation 2]

The functional compound b dissolved in methyl ethyl ketone was applied with a brush to one surface of each of the cubic three-dimensional models produced in Examples and Comparative Example such that a film thickness after drying was 10 µm, and the surface was colored. Then, the colored surface of one of the two three-dimensional models produced was irradiated with ultraviolet light having an intensity of 10⁵cd•m⁻² for one week with a xenon lamp. During this period, the colored surface of the three-dimensional model that was irradiated with ultraviolet rays was compared with the colored surface of the three-dimensional model that was not irradiated with ultraviolet rays, and a period until a fading ratio became 50% was determined. Note that the fading ratio was determined by calculating a change between the color before irradiation and the color after irradiation with a spectrophotometer CM-700d manufactured by Konica Minolta, Inc. Table 2 illustrates results thereof.

**[Table 2]**

| | Three-dimensional modeling material | | Functional compound | Period until fading ratio becomes 50% |
|---|---|---|---|---|
| | Olefin-based polymer | Organometallic complex | | |
| Example 2-1 | Polypropylene | Copper complex | Functional compound b | One week |
| Comparative Example 2-1 | Polypropylene | - | Functional compound b | One day |

As illustrated in Table 2 above, when the olefin-based polymer and the organometallic complex having a specific structure were contained, fading was unlikely to occur (Example 2-1). It is presumed that the organometallic complex and the functional compound interacted with each other, and the functional compound b easily stayed on the surface of the three-dimensional model.

Meanwhile, when the three-dimensional modeling material did not contain the organometallic complex, fading occurred in one day. It can be said that fixing is difficult in the three-dimensional model only made of polypropylene even when a colorant such as the functional compound b is applied thereto (Comparative Example 2-1).

The present application claims priority based on Japanese Patent Application No. 2018-142292 filed on July 30, 2018. Contents described in the application specification are all incorporated herein by reference.

### Industrial Applicability

The three-dimensional modeling material according to the present invention makes it possible to form a three-dimensional model with high accuracy by any of an injection molding method, an FDM method, a powder bed melt-bonding method, and an MJF method. In addition, for example, a coating film can be formed on a surface of an obtained three-dimensional model, and the three-dimensional model can adhere to another member via an adhesive without performing a primer treatment, a surface treatment, or the like on the three-dimensional model. In addition, the three-dimensional modeling material makes it possible to color a three-dimensional model itself, to impart various functions to the three-dimensional model itself, and the like. Therefore, the present invention is considered to contribute to further spread of the three-dimensional modeling method.

## Claims

1. A three-dimensional modeling material for forming a three-dimensional model using thermal energy,
the three-dimensional modeling material comprising
an olefin-based polymer and an organometallic complex, wherein
the organometallic complex contains a central metal, a ligand coordinated to the central metal, and a compatible group having a structure in which four or more carbon atoms bonded to the ligand are linearly arranged, and the central metal has one or more vacant orbitals, **characterised in that** the compatible group is an aliphatic chain having 4 or more carbon atoms and having no substituent.

2. The three-dimensional modeling material according to claim 1, wherein
the central metal of the organometallic complex is a metal selected from the group consisting of Co, Rh, Ni, Pd, Pt, Cu, Zn, Ti, V, Cr, Mn, Fe, Zr, Nb, Mo, Hf, Ta, and W.

3. The three-dimensional modeling material according to claim 1 or 2, wherein
95% or more of the total repeating units contained in the olefin-based polymer are olefin-derived repeating units

4. A three-dimensional model production method comprising:
a melting step of melting the three-dimensional modeling material according to any one of claims 1 to 3 by thermal energy; and
a thin layer forming step of extruding the melted three-dimensional modeling material into a filament to form a thin layer, wherein
the thin layer forming step is repeatedly performed to obtain a three-dimensional model.

5. A three-dimensional model production method comprising:
a thin layer forming step of forming a thin layer made of a powder material containing the three-dimensional modeling material according to any one of claims 1 to 3; and
a thermal energy irradiation step of selectively irradiating the thin layer with thermal energy to form a model layer in which the three-dimensional modeling material is bonded, wherein
the thin layer forming step and the thermal energy irradiation step are repeatedly performed to obtain a three-dimensional model.

6. A three-dimensional model production method comprising:
a thin layer forming step of forming a thin layer made of a powder material containing the three-dimensional modeling material according to any one of claims 1 to 3;
a fluid applying step of applying a bonding fluid containing an energy absorber to a specific region of the thin layer; and
a thermal energy irradiation step of irradiating the thin layer with thermal energy to melt the three-dimensional modeling material in the application region of the bonding fluid to form a model layer, wherein
the thin layer forming step, the fluid applying step, and the thermal energy irradiation step are repeatedly performed to obtain a three-dimensional model.

7. A three-dimensional model production method comprising
a step of subjecting the three-dimensional modeling material according to any one of claims 1 to 3 to injection molding

8. A three-dimensional model comprising an olefin-based polymer and an organometallic complex, wherein
the organometallic complex contains a central metal, a ligand coordinated to the central metal, and a compatible group having a structure in which four or more carbon atoms bonded to the ligand are linearly arranged, and the central metal has one or more vacant orbitals, **characterised in that** the compatible group is an aliphatic chain having 4 or more carbon atoms and having no substituent.

## Patentansprüche

1. Ein dreidimensionales Modelliermaterial zum Formen eines dreidimensionalen Modells unter Verwendung von Wärmeenergie,
wobei das dreidimensionale Modelliermaterial umfasst
ein Polymer auf Olefinbasis und einen metallorganischen Komplex, wobei
der metallorganische Komplex ein zentrales Metall, einen an das zentrale Metall koordinierten Liganden und eine kompatible Gruppe mit einer Struktur enthält, in der vier oder mehr an den Liganden gebundene Kohlenstoffatome linear angeordnet sind, und das zentrale Metall ein oder mehrere freie Orbitale aufweist, **dadurch gekennzeichnet, dass** die kompatible Gruppe eine aliphatische Kette ist, die 4 oder mehr Kohlenstoffatomen aufweist und die keinen Substituenten aufweist.

2. Dreidimensionales Modelliermaterial nach Anspruch 1, wobei
das zentrale Metall des metallorganischen Komplexes ein Metall ist, das aus der Gruppe bestehend aus Co, Rh, Ni, Pd, Pt, Cu, Zn, Ti, V, Cr, Mn, Fe, Zr, Nb, Mo, Hf, Ta und W ausgewählt ist.

3. Dreidimensionales Modelliermaterial nach Anspruch 1 oder 2, wobei
95 % oder mehr der gesamten im Polymer auf Olefinbasis enthaltenen Wiederholeinheiten von Olefinen abgeleitete Wiederholeinheiten sind.

4. Verfahren zur Herstellung eines dreidimensionalen Modells, umfassend:
einen Schmelzschritt des Schmelzens des dreidimensionalen Modelliermaterials nach einem der Ansprüche 1 bis 3 durch Wärmeenergie; und
einen Schritt der Bildung einer Dünnschicht, bei dem das geschmolzene dreidimensionale Modelliermaterial zu einem Faden extrudiert wird, um eine Dünnschicht zu bilden, wobei
der Schritt der Bildung der Dünnschicht wiederholt durchgeführt wird, um ein dreidimensionales Modell zu erhalten.

5. Verfahren zur Herstellung eines dreidimensionalen Modells, umfassend:
einen Schritt der Bildung einer Dünnschicht, bei dem eine Dünnschicht aus einem Pulvermaterial gebildet wird, das das dreidimensionale Modelliermaterial nach einem der Ansprüche 1 bis 3 enthält; und
einen Schritt der Bestrahlung mit Wärmeenergie, bei dem die Dünnschicht selektiv mit Wärmeenergie bestrahlt wird, um eine Modellschicht zu bilden, in der das dreidimensionale Modelliermaterial gebunden ist, wobei
der Schritt der Bildung der Dünnschicht und der Schritt der Bestrahlung mit Wärmeenergie wiederholt durchgeführt werden, um ein dreidimensionales Modell zu erhalten.

6. Verfahren zur Herstellung eines dreidimensionalen Modells, umfassend:
einen Schritt der Bildung einer Dünnschicht, bei dem eine Dünnschicht aus einem Pulvermaterial gebildet wird, das das dreidimensionale Modelliermaterial nach einem der Ansprüche 1 bis 3 enthält; und
einen Fluidaufbringungsschritt des Aufbringens eines ein Energieabsorptionsmittel enthaltenden Bindungsfluids auf einen bestimmten Bereich der Dünnschicht; und
einen Schritt der Bestrahlung mit Wärmeenergie, bei dem die Dünnschicht mit Wärmeenergie bestrahlt wird, um das dreidimensionale Modelliermaterial in dem Aufbringbereich des Bindungsfluids zu schmelzen, so dass eine Modellschicht gebildet wird, wobei
der Schritt der Bildung der Dünnschicht, der Fluidaufbringungsschritt und der Schritt der Bestrahlung mit Wärmeenergie wiederholt durchgeführt werden, um ein dreidimensionales Modell zu erhalten.

7. Verfahren zur Herstellung eines dreidimensionalen Modells, umfassend
einen Schritt, bei dem das dreidimensionale Modelliermaterial nach einem der Ansprüche 1 bis 3 einem Spritzgussverfahren unterzogen wird.

8. Dreidimensionales Modell, umfassend ein Polymer auf Olefinbasis und einen metallorganischen Komplex, wobei
der metallorganische Komplex ein zentrales Metall, einen an das zentrale Metall koordinierten Liganden und eine kompatible Gruppe mit einer Struktur enthält, in der vier oder mehr an den Liganden gebundene Kohlenstoffatome linear angeordnet sind, und das zentrale Metall ein oder mehrere freie Orbitale aufweist, **dadurch gekennzeichnet, dass** die kompatible Gruppe eine aliphatische Kette ist, die 4 oder mehr Kohlenstoffatomen aufweist und die keinen Substituenten aufweist.

## Revendications

1. Matériau de modélisation tridimensionnelle pour former un modèle tridimensionnel en utilisant de l'énergie thermique,
ou le matériau de modélisation tridimensionnelle comprend
un polymère à base d'oléfine et un complexe organométallique, dans lequel
le complexe organométallique contient un métal central, un ligand coordonné au métal central et un groupe compatible ayant une structure dans laquelle quatre atomes de carbone ou plus, liés au ligand, sont disposés de manière linéaire, et le métal central possède une ou plusieurs orbitales vacantes, **caractérisé en ce que** le groupe compatible est une chaîne aliphatique ayant 4 atomes de carbone ou plus et n'ayant pas de substituant.

2. Matériau de modélisation tridimensionnelle selon la revendication 1, dans lequel
le métal central du complexe organométallique est un métal choisi dans le groupe constitué par Co, Rh, Ni, Pd, Pt, Cu, Zn, Ti, V, Cr, Mn, Fe, Zr, Nb, Mo, Hf, Ta et W.

3. Matériau de modélisation tridimensionnelle selon la revendication 1 ou 2, dans lequel
95 % ou plus des unités répétitives totales contenues dans le polymère à base d'oléfine sont des unités répétitives dérivées d'oléfine.

4. Procédé de production d'un modèle tridimensionnel comprenant :
une étape de fusion lors de laquelle le matériau de modélisation tridimensionnelle selon l'une des revendications 1 à 3 est fondue par énergie thermique ; et
une étape de formation d'une couche mince consistant à extruder le matériau de modélisation tridimensionnelle fondu dans un filament pour former une couche mince, où
l'étape de formation de la couche mince est exécutée à plusieurs reprises pour obtenir un modèle tridimensionnel.

5. Procédé de production d'un modèle tridimensionnel comprenant :
une étape de formation d'une couche mince consistant à former une couche mince fabriquée à partir d'un matériau en poudre contenant le matériau de modélisation tridimensionnelle selon l'une des revendications 1 à 3 ; et
une étape d'irradiation par énergie thermique consistant à irradier sélectivement la couche mince avec de l'énergie thermique pour former une couche modèle dans laquelle le matériau de modélisation tridimensionnel est lié, où
l'étape de formation de la couche mince et l'étape d'irradiation par énergie thermique sont exécutées à plusieurs reprises pour obtenir un modèle tridimensionnel.

6. Procédé de production d'un modèle tridimensionnel comprenant :
une étape de formation d'une couche mince consistant à former une couche mince fabriquée à partir d'un matériau en poudre contenant le matériau de modélisation tridimensionnelle selon l'une des revendications 1 à 3 ;
une étape d'application de fluide consistant à appliquer un fluide de liaison contenant un absorbeur d'énergie à une région spécifique de la couche mince ; et
une étape d'irradiation par énergie thermique consistant à irradier la couche mince avec de l'énergie thermique pour faire fondre le matériau de modélisation tridimensionnel dans la région d'application du fluide de liaison afin de former une couche de modélisation, où
l'étape de formation de la couche mince, l'étape d'application de fluide et l'étape d'irradiation par énergie thermique sont effectuées à plusieurs reprises pour obtenir un modèle tridimensionnel.

7. Procédé de production d'un modèle tridimensionnel comprenant
une étape consistant à soumettre le matériau de modélisation tridimensionnelle selon l'une des revendications 1 à 3 à un moulage par injection.

8. Modèle tridimensionnel comprenant un polymère à base d'oléfine et un complexe organométallique, dans lequel
le complexe organométallique contient un métal central, un ligand coordonné au métal central et un groupe compatible ayant une structure dans laquelle quatre atomes de carbone ou plus, liés au ligand, sont disposés de manière linéaire, et le métal central possède une ou plusieurs orbitales vacantes, **caractérisé en ce que** le groupe compatible est une chaîne aliphatique ayant 4 atomes de carbone ou plus et n'ayant pas de substituant.
